# EUROPÄISCHE PATENTANMELDUNG

(11) **EP 1 422 638 A2**
(43) Veröffentlichungstag der Anmeldung: **26.05.2004**
(21) Anmeldenummer: 03026160.6
(22) Anmeldetag: 14.11.2003
(51) Int. Cl.: G06F 17/30

(54) **Rechnergestützte Ermittlung einer Ähnlichkeit eines elektronisch erfassten ersten Kennzeichens zu mindestens einem zweiten solchen Kennzeichen**

(30) Priorität: 19.11.2002 DE 10253786
(71) Anmelder: Schäfer, Detmar, 28717 Bremen (DE)
(72) Erfinder: Busemann, Stephan, 66133 Saarbrücken (DE); Eisele, Andreas, 66123 Saarbrücken (DE); Schröder, Marc, 66111 Saarbrücken (DE); Schäfer, Detmar, 28717 Bremen (DE)
(74) Vertreter: Manasse, Uwe, Dr.

(57) **Zusammenfassung**

Verfahren zur rechnergestützten Ermittlung einer Ähnlichkeit eines elektronisch erfaßten ersten Kennzeichens zu mindestens einem elektronisch erfaßten zweiten Kennzeichen, mit folgenden Schritten: für das erste und jedes zweite Kennzeichen wird jeweils mindestens eine phonetische Repräsentation bereitgestellt, zur Bestimmung der Ähnlichkeit wird ein Vergleich der phonetischen Repräsentation bzw. Repräsentationen für das erste Kennzeichen mit jeder entsprechenden Repräsentation jedes zweiten Kennzeichens durchgeführt, und es wird jedes zweite Kennzeichen ausgegeben, das beim Vergleich ein vorgegebenes Ähnlichkeitskriterium erfüllt, sowie Vorrichtung, Computerprogramm und Computer zur Durchführung desselben.

## Beschreibung

Die vorliegende Erfindung betrifft ein Verfahren und eine Vorrichtung zur rechnergestützten Ermittlung einer Ähnlichkeit eines elektronisch erfaßten ersten Kennzeichens zu mindestens einem elektronisch erfaßten zweiten Kennzeichen sowie ein Computerprogramm zur Durchführung des Verfahrens.

Bekannte automatisierte Markenähnlichkeitsrecherchen umfassen eine Überprüfung der schriftbildlichen und phonetischen Ähnlichkeit, wobei letztere lediglich anhand von phonetischen Regeln, wie z. B. "ck" klingt wie "kk", "ae" wie "ä" u.s.w durchgeführt wird. Dies weist den Nachteil auf, daß nach der höchstrichterlichen Rechtsprechung zur Verwechslungsgefahr relevante Marken durch eine derartige Markenähnlichkeitsrecherche nicht ermittelt und unter Umständen stattdessen nicht relevante Marken ermittelt werden. Dieses Problem tritt auch bei Markenkollisionsüberwachungen auf.

Der Erfindung liegt somit die Aufgabe zugrunde, das Verfahren und die Vorrichtung der eingangs genannten Art derart weiterzuentwickeln, daß das vorgenannte Problem nicht auftritt, zumindest aber vermindert wird.

Erfindungsgemäß wird diese Aufgabe gelöst durch ein Verfahren zur rechnergestützten Ermittlung einer Ähnlichkeit eines elektronisch erfaßten ersten Kennzeichens zu mindestens einem elektronisch erfaßten zweiten Kennzeichen, mit folgenden Schritten:
a) für das erste und jedes zweite Kennzeichen wird jeweils mindestens eine phonetische Repräsentation bereitgestellt,
b) zur Bestimmung der Ähnlichkeit wird ein Vergleich der phonetischen Repräsentation bzw. Repräsentationen für das erste Kennzeichen mit jeder entsprechenden Repräsentation jedes zweiten Kennzeichens durchgeführt, und
c) es wird jedes zweite Kennzeichen ausgegeben, das beim Vergleich ein vorgegebenes Ähnlichkeitskriterium erfüllt.

Während das der vorliegenden Erfindung zugrunde liegende Problem anhand einer Markenähnlichkeitsrecherche geschildert worden ist, soll der Begriff "Kennzeichen" nicht nur Marken, insbesondere Wortmarken und Markenformen mit Wortbestandteilen, sondern auch z. B. geschäftliche Bezeichnungen und geographische Herkunftsbezeichnungen umfassen.

Die elektronische Erfassung der Kennzeichen kann z. B. in der Bereitstellung einer Text-, Graphik- und/oder Audio-Datei bestehen.

Die phonetische Repräsentation(en) kann/können durch direkte Spracheingabe, aber auch durch Zwischenschaltung einer Einrichtung zum Erzeugen einer phonetischen Repräsentation z. B. aus einem eingegebenen Text bereitgestellt werden.

Weiterhin wird die Aufgabe gelöst durch eine Vorrichtung zur rechnergestützten Ermittlung einer Ähnlichkeit eines elektronisch erfaßten ersten Kennzeichens zu mindestens einem elektronisch erfaßten zweiten Kennzeichen, umfassend:
- eine Generiereinrichtung zum Erzeugen mindestens einer phonetischen Repräsentation für ein elektronisch erfaßtes erstes Kennzeichen und mindestens einer phonetischen Repräsentation für jedes elektronisch erfaßte zweite Kennzeichen,
- eine Ähnlichkeitsbestimmungseinrichtung zur Bestimmung der Ähnlichkeit anhand eines Vergleiches der phonetischen Repräsentation bzw. Repräsentationen für das erste Kennzeichen mit jeder entsprechenden Rpräsentation jedes zweiten Kennzeichens, und
- eine Ausgabeeinrichtung zur Ausgabe jedes ähnlichen zweiten Kennzeichens.

Bei dem Verfahren kann vorgesehen sein, daß die bzw. jede phonetische Repräsentation der ersten und der zweiten Kennzeichen eine Repräsentation in einer Lautschrift ist. Gegenüber einer Repräsentation in Form einer Audio-Datei weist dies die Vorteile auf, daß damit ein geringerer Speicherbedarf verbunden ist und ein Vergleich der phonetischen Repräsentationen mit einem geringeren Hard- und Software-Aufwand verbunden ist.

Insbesondere kann dabei vorgesehen sein, daß die bzw. jede phonetische Repräsentation durch eine Transkription des ersten und des zweiten Kennzeichens von einer Textform in eine Lautschrift durchgeführt wird. Eine Transkription von einer Textform in eine Lautschrift weist den Vorteil auf, daß eine eindeutige Zuordnung gegenüber einer Transkription von einer Audio-Form in eine Lautschrift überhaupt erst bzw. mit einem geringeren Hard- und Software-Aufwand möglich wird.

Gemäß einer besonderen Ausführungsform der Erfindung kann vorgesehen sein, daß die Korrektheit der Transkription nachfolgend anhand einer akustischen Wiedergabe der Lautschrift überprüft und gegebenenfalls nachfolgend angepaßt wird. Damit wird sichergestellt, daß die phonetische Repräsentation dem tatsächlichen Klangbild der Marke entspricht. Marken sind nämlich häufig das Ergebnis eines kreativen Prozesses und zeichnen sich durch ihre sprachlichen Besonderheiten aus. Ihre Analyse ist demzufolge mit der Herausforderung verbunden, Phänomene zu beschreiben, die sich von den Regelmäßigkeiten im allgemeinen Sprachgebrauch unterscheiden. Durch die hier vorgesehene Möglichkeit zur Überprüfung wird daher diesen Besonderheiten besonders Rechnung getragen.

Gemäß einer weiteren besonderen Ausführungsform der Erfindung kann vorgesehen sein, daß für das erste und für jedes zweite Kennzeichen jeweils mindestens eine erste phonetische Repräsentation in einer Lautschrift unter Berücksichtigung der Aussprache in einer ersten Sprache und eine zweite phonetische Repräsentation in der Lautschrift unter Berücksichtigung der Aussprache in einer zweiten Sprache bereitgestellt werden sowie zur Bestimmung der Ähnlichkeit ein Vergleich der ersten und der zweiten phonetischen Repräsentationen des ersten Kennzeichens mit den ersten und zweiten phonetischen Repräsentationen jedes zweiten Kennzeichens durchgeführt wird. Beispielsweise kann die erste Sprache die deutsche Sprache und die zweite Sprache die englische Sprache sein. Es wird dann die Aussprache des ersten Kennzeichens in der deutschen Sprache mit der Aussprache des zweiten Kennzeichens in der deutschen Sprache, die Aussprache des ersten Kennzeichens in englischer Sprache mit der Aussprache des zweiten Kennzeichens in der englischen Sprache als auch die Aussprache des ersten Kennzeichens in der deutschen Sprache mit der Aussprache des zweiten Kennzeichens in der englischen Sprache verglichen.

Vorteilhafterweise werden zur Bestimmung der Ähnlichkeit Abstandsmetriken vorgegeben.

Zweckmäßigerweise wird zur Bestimmung der Ähnlichkeit zusätzlich ein schriftbildlicher Vergleich der Textformen des ersten und jedes zweiten Kennzeichens durchgeführt.

Vorteilhafterweise wird das Ergebnis des phonetischen Vergleiches stärker als das Ergebnis des schriftbildlichen Vergleiches bei der Bildung eines Gesamtergebnisses gewichtet.

Gemäß einer weiteren besonderen Ausführungsform der Erfindung kann vorgesehen sein, daß das erste und jedes zweite Kennzeichen Marken sind und die Bestimmung der Ähnlichkeit für vorab zuordbare bzw. zugeordnete Waren und Dienstleistungen durchgeführt wird. Damit lassen sich die jeweiligen ersten und zweiten Kennzeichen zu den für sie beanspruchten Waren bzw. Dienstleistungen in Beziehung setzen (Warenähnlichkeit). Insbesondere kann dabei eine Gewichtung der Ähnlichkeit anhand der Waren und Dienstleistungen vorgenommen werden.

Vorteilhafterweise wird/werden als zweite(s) Kennzeichen Kennzeichen aus einer Datenbank verwendet.

Gemäß einer weiteren besonderen Ausführungsform der Erfindung kann vorgesehen sein, daß als erstes Kennzeichen ein über eine Eingabeeinrichtung eines Rechners eingegebenes Kennzeichen verwendet wird. Dies ist für eine Markenähnlichkeitsrecherche sinnvoll.

Zweckmäßigerweise wird das erste Kennzeichen gemeinsam mit der mindestens einen zugehörigen phonetischen Repräsentation in der Datenbank gespeichert. Dadurch wird das erste Kennzeichen bei einer nachfolgenden Recherche als ein zweites Kennzeichen berücksichtigt.

Gemäß einer weiteren besonderen Ausführungsform der Erfindung kann vorgesehen sein, daß nach einer Aktualisierung der Datenbank automatisch nacheinander für jedes neue zweite Kennzeichen in der Datenbank ein Verfahren nach einem der Ansprüche 1 bis 9 durchgeführt wird, wobei das jeweilige neue zweite Kennzeichen als erstes Kennzeichen verwendet wird. Dadurch wird eine automatische Markenkollisionsüberwachung ermöglicht.

Die Vorrichtungsunteransprüche betreffen vorteilhafte Weiterentwicklungen der Vorrichtung.

In weiteren Aspekten kann bei der Vorrichtung allein oder in Kombination vorgesehen sein,
daß die Ähnlichkeitsbestimmungseinrichtung zur zusätzlichen Durchführung eines schriftbildlichen Vergleiches der Textformen der ersten und zweiten Kennzeichen gestaltet ist,
die Ähnlichkeitsbestimmungseinrichtung eine Gewichtungseinrichtung zur wählbaren Gewichtung der Ergebnisse der phonetischen und schriftbildlichen Vergleiche entsprechend einem vorgebbaren Verhältnis umfaßt,
eine T exteingabeeinrichtung z ur E ingabe d es ersten Kennzeichens in Textform vorgesehen ist,
eine Datenbank zur Speicherung des ersten und des mindestens einen zweiten Kennzeichens und der zugehörigen Repräsentationen vorgesehen ist,
eine Datenbank zur Speicherung von zweiten Kennzeichen vorgesehen ist,
eine Eingabeeinrichtung zum Eingeben eines ersten Kennzeichens vorgesehen ist und/oder
die Vorrichtung derart gestaltet ist, daß nach einer Aktualisierung der Datenbank automatisch nacheinander für jedes neue zweite Kennzeichen in der Datenbank gemäß einem Verfahren entsprechend der vorliegenden Erfindung durchgeführt wird, wobei das jeweilige neue zweite Kennzeichen als erstes Kennzeichen verwendet wird.

Außerdem wird gemäß der vorliegenden Erfindung ein Computerprogramm nach Anspruch 13 oder 14, ein Computerprogramm-Produkt nach Anspruch 15, ein digitales Speichermedium nach Anspruch 16 und ein Computer nach Anspruch 17 bereitgestellt.

Der Erfindung liegt die überraschende Erkenntnis zugrunde, daß durch Verwendung von phonetischen Repräsentationen überhaupt erst eine Ähnlichkeitsrecherche in einem Datenbestand mit Firmenbezeichnungen bzw. Marken auf der Basis eines Vergleiches durchgeführt werden kann, wie er für die Frage der Verletzungsgefahr relevant ist. Für einen menschlichen Rechercheur w äre es nämlich nicht m öglich, i nnerhalb einer akzeptablen Zeit einen phonetischen Vergleich mit allen Firmenbezeichnungen bzw. Marken in den derzeit zur Verfügung stehenden Datenbanken durchzuführen. Er müßte sich nämlich alle mit dem ersten Kennzeichen zu vergleichenden z weiten K ennzeichen vorsprechen bzw. gedanklich vorsprechen, was angesichts der Vielzahl von Markeneintragungen (Ende 2001 laut Jahresbericht des Deutschen Patent- und Markenamts 2001, S. 91 alleine 606637 deutsche Eintragungen) faktisch unmöglich ist.

Wenn gemäß einer besonderen Ausführungsform die phonetischen Repräsentationen zudem in einer Lautschrift erfolgen, so werden dadurch die damit verbundenen Datenmengen gegenüber Audio-Dateien um einiges geringer.

Wenn darüber hinaus gemäß einer weiteren besonderen Ausführungsform der Erfindung die ersten und die zweiten Kennzeichen in Textform bereitgestellt werden, lassen sich die phonetischen Repräsentationen in einer Lautschrift mit einem relativ geringen Zeitaufwand durch Transkription erzeugen. Dies spielt insbesondere für die zweiten Kennzeichen eine Rolle, da diese üblicherweise bereits in großen Datenbänken in Textform vorliegen und somit mit einem relativ geringen Aufwand durch Transkription für einen Vergleich zur Verfügung gestellt werden können.

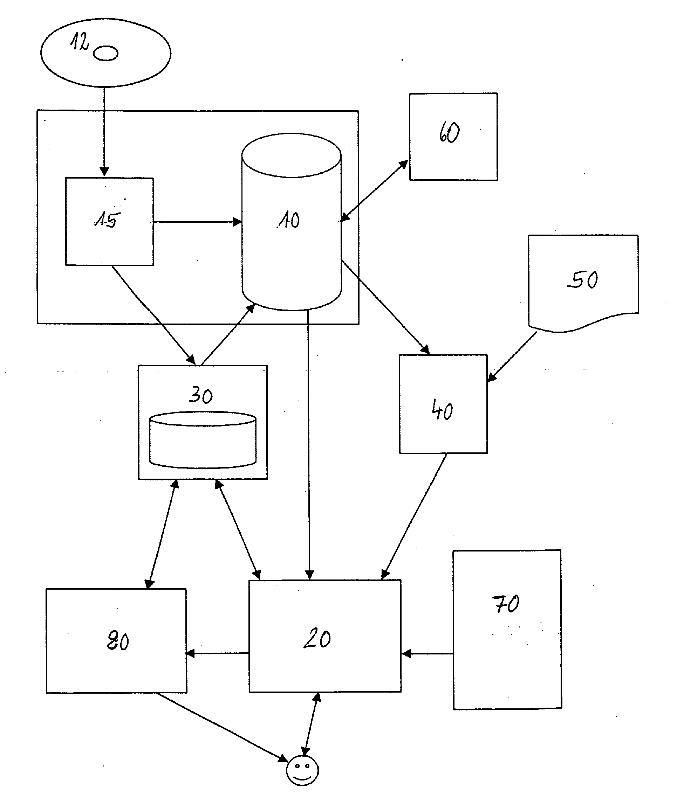

Weitere Merkmale und Vorteile der Erfindung ergeben sich aus den Ansprüchen und aus der nachstehenden Beschreibung, in der ein Ausführungsbeispiel anhand der einzigen Zeichnung im einzelnen erläutert ist.

Die einzige Figur zeigt eine Vorrichtung gemäß einer besonderen Ausführungsform der vorliegenden Erfindung zur rechnergestützten Ermittlung einer Ähnlichkeit eines elektronisch erfaßten ersten Kennzeichens zu mindestens einem elektronisch erfaßten zweiten Kennzeichen (Markenähnlichkeitsrecherche). Die Vorrichtung umfaßt folgende Einrichtungen:
- 10: Datenbank mit Werkzeugen 15 zum Einlesen von zweiten Kennzeichen in Form von Marken
- 20: Benutzeroberfläche für eine rechnergestützte Markenähnlichkeitsrecherche, umfassend e ine paßwortgeschützte Zugangskontrolle, eine Eingabemaske für eine Basis-Markenähnlichkeitsrecherche, eine Eingabemaske für eine Experten-Markenähnlichkeitsrecherche, ein Fenster zur Auflistung der Ergebnisse der Markenähnlichkeitsrecherche und zur detaillierten Darstellung einzelner Resultate der Markenähnlichkeitsrecherche und eine Einrichtung zum Sammeln von Resultaten von mehreren Markenähnlichkeitsrecherchen
- 30: Generiereinrichtung, die eine Transkriptionseinrichtung zum Erzeugen von phonetischen Repräsentationen in einer Lautschrift umfaßt
- 40: Ähnlichkeitsbestimmungseinrichtung zur Bestimmung der Ähnlichkeit von Marken
- 50: Einrichtung zur Vorgabe von phonetischen und schriftbildlichen Ähnlichkeitsmetriken
- 60: Einrichtung zur Extraktion von statistischen Daten
- 70: Einrichtung zur Berechnung von Benutzungszwang
- 80: Einrichtung zur Sprachausgabe, umfassend eine Generiereinrichtung, die eine Transkriptionseinrichtung zur Transkription eines ersten Kennzeichens in Form einer Marke in eine L autschrift umfaßt, e ine Einrichtung zur Erzeugung von akustischen Parameterdaten, eine Stimm-Datenbank und eine Sprachsyntheseeinrichtung zur Erzeugung von Sprachdaten (z.B. MBROLA).

Nachfolgend werden beispielhafte Betriebsweisen der vorangehend genannten Einrichtungen beschrieben:

### 10 Datenbank mit Werkzeugen zum Einlesen von zweiten Kennzeichen in Form von Marken

Als Datenbanksystem dient z. B. das System MySQL. Das Datenbank-Schema ist so definiert, daß alle für die Anwendung relevanten Informationen repräsentiert werden können. Zum Einlesen der Marken (zweiten Kennzeichen) werden Skripte erstellt, die die Marken-Rohdaten 12 unter Zuhilfenahme aller notwendiger Einrichtungen in interne Repräsentationen der Datenbank umwandeln. Aus der Gesamtmenge aller in der Datenbank vorhandenen Marken werden nach dem Einlesen Index-Repräsentationen generiert, die eine Markenähnlichkeitsrecherche ermöglichen.

### 20 Benutzeroberfläche für eine rechnergestützte Markenähnlichkeitsrecherche

Zugang zum Computerprogramm zur Durchführung der Markenähnlichkeitsrecherche ist nur nach Eingabe einer vorher vereinbarten Kennung möglich (paßwortgeschützte Zugangskontrolle).

Die Eingabemaske für eine Basis-Markenähnlichkeitsrecherche erlaubt die Eingabe eines einzelnen zu suchenden Zeichens (Marke oder Markenbestandteil) oder einer Folge von Zeichen (Mehrwortmarke).

Die Eingabemaske für eine Experten-Markenähnlichkeitsrecherche erlaubt darüber hinaus die Veränderung bestimmter Parameter, insbesondere die Auswahl der Sprache, z. B. Deutsch und/oder Englisch, die der phonetischen Transkription zugrunde liegt, Sprachausgabe, Eingabe alternativer Aussprachen in Quasi-Lautschrift und deren Ausgabe, Gewichtung von Wort- bzw. Markenbestandteilen anhand einer Frequenzanalyse und manuelle Modifikation einer automatisch vorgenommenen Gewichtung.

In dem Fenster zur Auflistung der Resultate der Markenähnlichkeitsrecherche werden die gefundenen Treffer in einer Rangordnung gemäß ihrer Ähnlichkeit mit dem ersten Kennzeichen (Anfragemarke) untereinander angeordnet.

In dem Fenster zur detaillierten Darstellung einzelner Resultate der Markenähnlichkeitsrecherche werden für einzelne Marken alle in der Datenbank vorhandenen Informationen angezeigt.

Im übrigen bietet die Benutzeroberfläche die Möglichkeit, die Resultate mehrerer Markenähnlichkeitsrecherchen in eine gemeinsame Trefferliste zu überführen.

### 30 Generiereinrichtung

Zur Suche nach phonetisch ähnlichen Marken wird eine Transkription in eine Lautschrift vorgenommen.

Zur Suche nach schriftbildlich ähnlichen Marken können bei Bedarf weitere interne Repräsentationsformen verwendet werden, die beispielsweise eine Normalisierung von Groß/Kleinschreibung, d ie Entfernung von Akzenten u nd U mformung von U mlauten b einhalten können.

In anderen Fällen sind die Transkriptionseinrichtungen so zu implementieren, daß die Transkription einer größeren Menge von Marken (zweiten Kennzeichen) (z. B. beim Einlesen der Datenbank) mit vertretbaren Wartezeiten möglich ist.

### 40 Ähnlichkeitsbestimmungseinrichtung

Die Ähnlichkeitsbestimmungseinrichtung ermöglicht die Suche nach ähnlichen Marken a n-hand einer Ähnlichkeitsmetrik (siehe unten). Bei der Suche wird eine Anfragemarke (erstes Kennzeichen) und eine Toleranz frei wählbar vorgegeben. Als Resultat werden alle Marken (zweite Kennzeichen) der Datenbank ermittelt, die sich nur im Rahmen der vorgegebenen Toleranz von der Anfragemarke unterscheiden, das heißt ein vorgegebenes Ähnlichkeitskriterium erfüllen. Dabei ist der Abstand zweier Zeichenketten (, die jeweiligen Repräsentationen des ersten und des zweiten Kennzeichens entsprechen) als die Summe aller Abstände von Teilzeichenketten in einer optimalen Zuordnung definiert. Die Ähnlichkeitsbestimmungseinrichtung unterstützt die Angabe beliebiger Abstandsmetriken in Form einer Aufzählung von gewichteten Paaren von Teilzeichenketten, d ie o ptional m it k ontextuellen E inschränkungen versehen werden können. Darüber hinaus können generische Abstände für das Einfügen, das Löschen, das Vertauschen oder das Ersetzen beliebiger Zeichen (z. B. im Falle einer phonetischen Repräsentation ein Lautschriftzeichen und im Falle einer schriftbildlichen Repräsentation ein Buchstabe) definiert werden.

### 50 Einrichtung zur Vorgabe von phonetischen und schrifibildlichen Abstandsmetriken

Es werden Abstandsmetriken vorgegeben, die sich auf Paare einzelner Zeichen oder Zeichenketten beziehen. Beispielsweise kann darin ausgedrückt werden, daß zwischen der Buchstabenfolge "cl" und dem Buchstaben "d" eine starke schriftbildliche Ähnlichkeit besteht, oder daß zwischen den Lautschriftzeichen "@" und "9" eine größere phonetische Ähnlichkeit besteht als zwischen "@" und "I". Für alle verwendeten Repräsentationsformen wird ein Inventar der damit darstellbaren Paare ähnlicher Zeichen und Zeichenkettenketten erstellt.

### 60 Einrichtung zur Extraktion von statistischen Daten

Bei der Experten-Markenähnlichkeitsrecherche wird optional die Gewichtung von Markenbestandteilen anhand ihrer Frequenz in der Datenbank vorgesehen. Hierzu muß jede Marke der Datenbank in ihre Bestandteile zerlegt und müssen für alle vorkommenden Markenbestandteile Frequenzen ermittelt werden. Die statistischen Angaben werden ihrerseits in der Datenbank abgelegt und bei Änderungen der Datenbank aktualisiert.

### 70 Einrichtung zur Berechnung von Benutzungszwang

Das Computerprogramm kann den Ablauf der Benutzungsschonfrist für DE-, IR-DE- und EU-Marken berechnen und anzeigen, ob sich die Marke aus der Datenbank bereits im Benutzungszwang befindet. Diesbezüglich gibt es ein entsprechendes Ausgabefeld "Benutzungszwang".

### 80 Einrichtung zur Sprachausgabe

Die hier verwendete Transkriptionseinrichtung entspricht der oben unter 30 beschriebenen Transkriptionseinrichtung.

Aus der phonetischen Repräsentation einer Marke wird eine akustische Parameterdatei für die Sprachsynthese erzeugt. Das Format dieser akustischen Parameterdatei entspricht den Anforderungen der Sprachausgabeeinrichtung.

Zur Sprachsynthese wird eine Stimm-Datenbank von Diphonen eingesetzt.

Die Erzeugung eines akustischen Signals (Audio-Datei) kann mittels eines beliebigen Text-To-Speech-Programms erfolgen.

Soll bei der Markenähnlichkeitsrecherche gemäß einer besonderen Ausführungsform der Erfindung auch die Ähnlichkeit der Waren und Dienstleistungen berücksichtigt werden, für die ein Markenschutz besteht, so kann die Benutzeroberfläche 20 über eine Eingabemaske verfügen, mit der ein Nutzer bestimmte Waren und Dienstleistungen auswählen kann, die bei der Markenähnlichkeitsrecherche Berücksichtigung finden sollen. Auf der Grundlage einer oder mehrerer vorab erstellter Liste(n) mit einer Zuordnung von bestimmten Waren und Dienstleistungen zu entsprechenden Gegenklassen kann dann die Vorrichtung vorzuschlagende Rechercheklassen ermitteln. Diese können vom Nutzer individuell modifiziert werden. Die Ähnlichkeitsbestimmungseinrichtung 40 führt dann die Suche nach ähnlichen Marken lediglich in den letztendlich festgelegten Rechercheklassen durch.

Gemäß einer weiteren besonderen Ausführungsform der Erfindung kann vorgesehen sein, daß die Vorrichtung anstelle oder zusätzlich zu einer Markenähnlichkeitsrecherche eine automatische Markenkollisionsüberwachung durchführt. Dazu wird das Verfahren nach einem der Ansprüche 1 bis 9 jeweils nach einer Aktualisierung der Bestände der Datenbank 10 automatisch nacheinander für jedes neue zweite Kennzeichen in der Datenbank durchgeführt. Wenn eine Markenähnlichkeit und damit eine Markenkollisionsmöglichkeit festgestellt wird, so wird automatisch ein elektronischer Markenkollisionshinweis unter Angabe des Ablaufs der Widerspruchsfrist bezüglich der Marke aus den neuen Daten abgegeben.

Die in der vorstehenden Beschreibung, in der Zeichnung sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein.

### Bezugszeichenliste

- 10: Datenbank
- 12: Marken-Rohdaten
- 15: Werkzeuge
- 20: Benutzeroberfläche
- 30: Generiereinrichtung
- 40: Ähnlichkeitsbestimmungseinrichtung
- 50: Einrichtung zur Vorgabe von phonetischen und schriftbildlichen Ähnlichkeitsmetriken
- 60: Einrichtung zur Extraktion von statistischen Daten
- 70: Einrichtung zur Berechnung von Benutzungszwang
- 80: Einrichtung zur Sprachausgabe

## Patentansprüche

1. Verfahren zur rechnergestützten Ermittlung einer Ähnlichkeit eines elektronisch erfaßten ersten Kennzeichens zu mindestens einem elektronisch erfaßten zweiten Kennzeichen, mit folgenden Schritten:
a) für das erste und jedes zweite Kennzeichen wird jeweils mindestens eine phonetische Repräsentation bereitgestellt,
b) zur Bestimmung der Ähnlichkeit wird ein Vergleich der phonetischen Repräsentation bzw. Repräsentationen für das erste Kennzeichen mit jeder entsprechenden Repräsentation jedes zweiten Kennzeichens durchgeführt, und
c) es wird jedes zweite Kennzeichen ausgegeben, das beim Vergleich ein vorgegebenes Ähnlichkeitskriterium erfüllt.

2. Verfahren nach Anspruch 1, **dadurch gekennzeichnet, daß** die bzw. jede phonetische Repräsentation der ersten und der zweiten Kennzeichen eine Repräsentation in einer Lautschrift ist.

3. Verfahren nach Anspruch 2, **dadurch gekennzeichnet, daß** die bzw. jede phonetische Repräsentation durch eine Transkription des ersten und des zweiten Kennzeichens von einer Textform in eine Lautschrift durchgeführt wird.

4. Verfahren nach Anspruch 3, **dadurch gekennzeichnet, daß** die Korrektheit der Transkription nachfolgend anhand einer akustischen Wiedergabe der Lautschrift überprüft und gegebenenfalls nachfolgend angepaßt wird.

5. Verfahren nach einem der Ansprüche 2 bis 4, **dadurch gekennzeichnet, daß** für das erste und für jedes zweite Kennzeichen jeweils mindestens eine erste phonetische Repräsentation in einer Lautschrift unter Berücksichtigung der Aussprache in einer ersten Sprache und eine zweite phonetische Repräsentation in der Lautschrift unter Berücksichtigung der Aussprache in einer zweiten Sprache bereitgestellt werden sowie zur Bestimmung der Ähnlichkeit ein Vergleich der ersten und der zweiten phonetischen Repräsentationen des ersten Kennzeichens mit den ersten und zweiten phonetischen Repräsentationen jedes zweiten Kennzeichens durchgeführt wird.

6. Verfahren nach einem der vorangehenden Ansprüche, **dadurch gekennzeichnet, daß** zur Bestimmung der Ähnlichkeit Abstandsmetriken vorgegeben werden.

7. Vorrichtung zur rechnergestützten Ermittlung einer Ähnlichkeit eines elektronisch erfaßten ersten Kennzeichens zu mindestens einem elektronisch erfaßten zweiten Kennzeichen, umfassend:
- eine Generiereinrichtung zum Erzeugen mindestens einer phonetischen Repräsentation für ein elektronisch erfaßtes erstes Kennzeichen und mindestens einer phonetischen Repräsentation für jedes elektronisch erfaßte zweite Kennzeichen,
- eine Ähnlichkeitsbestimmungseinrichtung zur Bestimmung der Ähnlichkeit anhand eines Vergleiches der phonetischen Repräsentation bzw. Repräsentationen für das erste Kennzeichen mit jeder entsprechenden Repräsentation jedes zweiten Kennzeichens, und
- eine Ausgabeeinrichtung zur Ausgabe jedes ähnlichen zweiten Kennzeichens.

8. Vorrichtung nach Anspruch 7, **dadurch gekennzeichnet, daß** die Generiereinrichtung zum Erzeugen einer bzw. von Repräsentation(en) in einer Lautschrift gestaltet ist.

9. Vorrichtung nach Anspruch 8, **dadurch gekennzeichnet, daß** die Generiereinrichtung eine Transkriptionseinrichtung zur Transkription von einer Textform in eine Lautschrift aufweist.

10. Vorrichtung nach Anspruch 9, **dadurch gekennzeichnet, daß** eine Sprachausgabeeinrichtung zur akustischen Wiedergabe einer phonetischen Repräsentation in einer Lautschrift und eine Korrektureinrichtung zur bedarfsweisen Korrektur einer phonetischen Repräsentation in der Lautschrift vorgesehen sind.

11. Vorrichtung nach einem der Ansprüche 8 bis 10, **dadurch gekennzeichnet, daß** die Generiereinrichtung derart gestaltet ist, daß für das erste und für jedes zweite Kennzeichen jeweils mindestens eine erste phonetische Repräsentation in einer Lautschrift unter Berücksichtigung der Aussprache in einer ersten Sprache und eine zweite phonetische Repräsentation in der Lautschrift unter Berücksichtigung der Aussprache in einer zweiten Sprache erzeugt werden, und die Ähnlichkeitsbestimmungseinrichtung zur Bestimmung der Ähnlichkeit anhand eines Vergleiches der ersten und der zweiten phonetischen Repräsentationen des ersten Kennzeichens mit den ersten und zweiten phonetischen Repräsentationen jedes zweiten Kennzeichens gestaltet ist.

12. Vorrichtung nach einem Ansprüche 7 bis 11, **dadurch gekennzeichnet, daß** eine Einrichtung zur Vorgabe von Abstandsmetriken für die Ähnlichkeitsbestimmungseinrichtung vorgesehen ist.

13. Computerprogramm mit Programmcodemitteln, um ein Verfahren gemäß einem der Ansprüche 1 bis 6 durchzuführen, wenn das Programm auf einem Computer ausgeführt wird.

14. Computerprogramm mir Programmcodemitteln nach Anspruch 13, die auf einem computerlesbaren Datenträger gespeichert sind.

15. Computerprogramm-Produkt mit auf einem maschinenlesbaren Träger gespeicherten Programmcodemitteln, um alle Schritte gemäß einem der Ansprüche 1 bis 6 durchzuführen, wenn das Programm auf einem Computer ausgeführt wird.

16. Digitales Speichermedium, insbesondere Diskette oder CD-ROM, mit elektrisch auslesbaren Steuersignalen, die so mit einem programmierbaren Computersystem zusammenwirken können, daß ein Verfahren nach einem der Ansprüche 1 bis 6 ausgeführt wird.

17. Computer, der zur Durchführung des Verfahrens nach einem der Ansprüche 1 bis 6 programmtechnisch eingerichtet ist.
